# EUROPÄISCHE PATENTSCHRIFT

(11) **EP 2 239 979 B1**
(45) Veröffentlichungstag und Bekanntmachung des Hinweises auf die Patenterteilung: **07.09.2016**
(21) Anmeldenummer: 10168618.6
(22) Anmeldetag: 26.11.1999
(51) Int. Cl.: H04W 36/08

(54) **Verfahren zum Betrieb einer Mobilfunkstation in einem Mobilfunksystem**
Method for operating a mobile radio station in a mobile radio system
Procédé de fonctionnement d'une station de radio mobile dans un système de radio mobile

(30) Priorität: 08.01.1999 DE 19900436
(43) Veröffentlichungstag der Anmeldung: 13.10.2010
(62) Teilanmeldung aus: 07114706.0
(73) Patentinhaber: IPCom GmbH & Co. KG, 82049 Pullach (DE)
(72) Erfinder: Radimirsch, Markus, 31311, Uetze (DE); Vollmer, Vasco, 31162, Bad Salzdetfurth (DE)
(74) Vertreter: Tomlinson, Edward James

(56) Entgegenhaltungen:
- EP-A2- 0 699 011
- WO-A1-97/34429
- US-A- 5 222 248
- MOULY M ET AL: "The GSM system for Mobile Communications" 1. Januar 1992 (1992-01-01), GSM SYSTEM FOR MOBILE COMMUNICATIONS. COMPREHENSIVE OVERVIEW OF THE EUROPEAN DIGITAL CELLULAR SYSTEMS, CELL & SYS, FRANCE, PAGE(S) 396 - 412 , XP002127743 ISBN: 978-2-9507190-0-3 * paragraph 6.3.4 *

## Beschreibung

### Stand der Technik

Die Erfindung geht aus von einem Verfahren, wobei eine Verbindung der Mobilstation zu einem Netzwerk von einer ersten Basisstation zu einer zweiten Basisstation des Netzwerks weitergegeben werden kann (Handover).

Heutige digitale Mobilfunksysteme sind im Allgemeinen als sogenannte "Zellulare Netze" aufgebaut. Das heißt jeweils ein Zugangspunkt (im folgenden Basisstation (BS) genannt) bildet jeweils eine Funkzelle aus. Die Größe dieser Zelle wird dabei von der Feldausbreitung und der gewünschten Datenrate und der Zahl von Mobilstationen (MS) die mit der Basisstation in Funkkontakt stehen bestimmt. Da diese Zellen in aktuellen Systemen durch hohe Frequenzen und hohe Mobilstationszahlen eine sehr begrenzte Größe haben müssen, kommt dem Übergang einer Mobilstation von einer Zelle in eine benachbarte Zelle große Bedeutung zu. Dieser Übergang der Verbindung der Mobilstation von der Funkzelle 1 in die Funkzelle 2 wird als Handover (HO) bezeichnet.

Dabei kann grundsätzlich zunächst zwischen zwei Varianten unterschieden werden:
- Handover mit Abbruch von aktiven Verbindungen (z.B. DECT)
- Handover mit Übernahme von aktiven Verbindungen zur neuen

### BASISSTATION(z.B. GSM)

Handover wird noch weiter unterteilt in:
Soft-Handover: Umschalten, ohne Verlust von einzelnen Daten
Hard-Handover: Umschalten, mit Verlust von einzelnen Daten
Forward-Handover: Die Mobilstation sucht seine Ziel-Basisstation selbst und meldet sich direkt dort an
Backward-Handover: Die Mobilstation meldet das HO bei der alten Basisstation an, diese übernimmt die Suche nach einer neuen, geeigneten Basisstation
Nicht-Netzwerkunterstützt: (nur forward-HO) die Mobilstation sorgt bei der Anmeldung bei der neuen Basisstation selbst dafür, dass alle Verbindungsparameter und auch die Verbindungen neu gesetzt werden
Netzwerkunterstützt: Das Netzwerk ermöglicht die direkte Kommunikation zwischen den beiden beteiligten Basisstationen. Die alte Basisstation übermittelt dabei alle relevanten Informationen über die Mobilstation und seine Verbindungen an die neue Basisstation
Mobilstation-initiiertes Handover: Die Mobilstation stellt fest, dass ein HO notwendig wird und initiiert diesen Prozeß
Basisstation-initiiertes Handover (forced HO): Die Basisstation möchte Kapazitäten frei machen, oder sie stellt fest, dass die Funkverbindung schlechter wird und teilt der MS mit, dass es ein HO durchführen soll

Heutige Handover-Verfahren z. Bsp. in GSM setzen voraus, dass das Backbone-Netzwerk das Handover unterstützen kann. Dies kann jedoch in Zukunft nicht immer nicht vorausgesetzt werden, da hier unterschiedliche Backbone-Netzwerke angeschlossen sein können. Dadurch ergeben sich einige Einschränkungen bezüglich einiger spezieller Kombinationen von HO-Typen.

Aus der WO 97/34429 ist ein Verfahren zum Handover in einem integrierten GSM/PACS Mobilfunksystem bekannt. Im GSM-Netz initiiert die Basisstation das Handover auf Basis von durch die Mobilstation gemessenen Signalstärken und bestimmt die neue Basisstation; dagegen wird im PACS das Handover durch die Mobilstation initiiert.

Modifikationen an dem PACs-Protokoll, um dieses mit dem GSM-Protokoll zu vereinbaren, werden ausführlich beschrieben.

Aus der US 5,222,248 ist ein Bündelfunk-Kommunikationssystem mit mindestens zwei Basisstationen bekannt, wobei ein Anruf-Handover-Verfahren während des Anrufs erfolgen kann, und zwar wenn sich ein Funkgerät aus dem Versorgungsbereich einer Station in den Versorgungsbereich einer anderen Station bewegt. Diese zweite Station kann unter Umständen für diesen Handover keine Kommunikationsressourcen zur Verfügung haben, so dass dem Funkgerät eine Besetztmeldung mitgeteilt wird. Anhand eines durch den Benutzer wählbaren Stationswechsels kann der Benutzer über das Funkgerät den Wunsch äußern, zu der vorherigen Station zurückzukehren, so dass das Funkgerät zum vorherigen Kanal zurückkehrt, um den Anruf fortzusetzen.

### Vorteile der Erfindung

Gegenüber den bekannten Verfahren, den bekannten Mobilstationen und den bekannten Basisstationen hat die Erfindung mit den Merkmalen des unabhängigen Patentanspruchs den Vorteil, dass ein Handover auch bei Netzwerken möglich ist, bei denen die Kommunikation zwischen den einzelnen Basisstationen nur eingeschränkt möglich ist. Derartige Netzwerke können insbesondere dann auftreten, wenn in einer Umbruchsphase Teile des Netzwerkes nach einem anderen Standard arbeiten als andere Teile des Netzwerkes oder wenn die Basisstationen mit unterschiedlichen Fähigkeiten ausgestatte sind. Wenn dann ein Handover zwischen zwei Basisstationen erfolgt, die nach dem selben Standard arbeiten, so können sich diese Basisstationen untereinander austauschen und so den Handover unterstützen. Es kann dann auch sichergestellt werden, dass der Handover von einer Basisstation zur anderen Basisstation problemlos und sicher erfolgt. Wenn jedoch der Handover von einer Basisstation nach dem einen Standard zur Basisstation nach dem anderen Standard erfolgt, so kann eine Situation auftreten, bei der die Basisstationen nicht unmittelbar miteinander kommunizieren können. In dieser Situation ist es dann vorstellbar, dass das Netzwerk den Handover nicht durch die Weiterreichung der Verbindungsdaten für die Verbindung des Netzwerks mit der Mobilstation von der einen Basisstation zur anderen Basisstation unterstützen kann. Weiterhin kann dann auch nicht sichergestellt werden, ob der Handover zuverlässig erfolgt, d.h. es kann die Situation auftreten, dass eine Mobilstation versucht ein Handover durchzuführen und dieser Versuch fehlschlägt. In diesem Fall kann die Mobilstation dann problemlos zur ursprünglichen Basisstation zurückkehren.

Es werden neue Verfahren vorgestellt, die einige der existierenden Probleme für forward-HO lösen. Das erste Verfahren ermöglicht sowohl eine netzwerkunterstützte, als auch die nicht-netzwerkunterstützte Abwicklung des HO. Das zweite Verfahren ermöglicht die Kombination aus Basisstation-initiiertem und forward HO. Dieses war bisher nur möglich, wenn in Kauf genommen wird, dass die Mobilstation, welche das HO durchführen soll keine neue Basisstation findet und so seine Verbindungen beendet werden.

Der erste Punkt gibt die Möglichkeit zunächst eine Variante des HO's zu implementieren, die ohne Netzwerkunterstützung auskommt. Sollte das Netzwerk jedoch die Fähigkeit haben, Handover zu unterstützen kann diese Fähigkeit ausgenutzt werden. Dazu wird ein zusätzliches Signal verwendet, das von der Basisstation versendet wird und diese Fähigkeit anzeigt.

Der zweite Punkt zeigt ein Verfahren, mit dem ein forced forward HO durchgeführt werden, bei dem die Wahrscheinlichkeit, dass die MS seine Verbindung beenden muß stark reduziert wird.

### Zeichnungen

Ausführungsbeispiele der Erfindung sind in den Zeichnungen dargestellt und in der nachfolgenden Beschreibung näher erläutert. Es zeigen Figur 1 ein Netzwerk in Verbindung mit einer Mobilstation, Figuren 2 und 3 ein erstes Handover-Verfahren und Figuren 4 bis 6 ein zweites Handover-Verfahren.

### Beschreibung

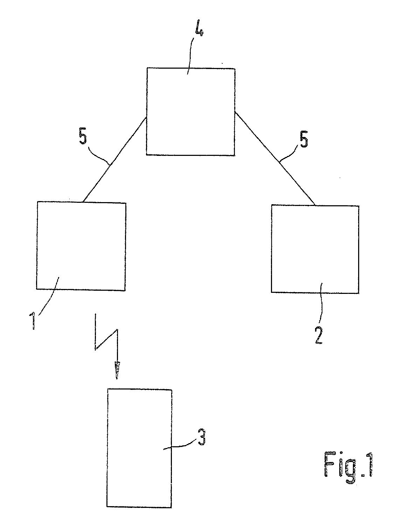

In der Figur 1 wird schematisch ein zellulares Mobilfunksystem dargestellt. In der Figur 1 werden exemplarisch zwei Basisstationen (BS) 1, 2 dargestellt, die jeweils zwei Funkzellen bilden. In der Figur 1 wird durch den Pfeil exemplarisch dargestellt, dass die BS1 in Funkverbindung mit der Mobilstation (MS) 3 steht. Die beiden BS1, 2 sind durch Festleitungen 5 mit einer Schalteinheit 4 verbunden und bilden ein fest installiertes Netzwerk. Die Schalteinheit 4 ist mit einem weiteren hier nicht dargestellten Netzwerk zum Beispiel einem üblichen Telefonnetz verbunden. Die Mobilstation (MS) 3 kann über eine Funkverbindung zu den BS 1, 2 über die Festleitungen 5 und die Schalteinheit 4 so Informationen (z.B. Sprache oder Daten) mit dem Netzwerk austauschen. Da die MS 3 mobil ist, kann sich die Notwendigkeit ergeben, dass die Funkverbindung, die hier in der Figur 1 zunächst mit der BS 1 besteht von der BS 1 getrennt wird und auf die BS 2 umgelegt wird. Entsprechend wird dann der Informationsfluß d.h. die Verbindung in der Schalteinheit 4 von der BS 1 auf die BS 2 umgelegt. Der Abbruch der Funkverbindung zwischen der BS 1 und der MS3 und das Aktivieren der Funkverbindung zwischen der BS 2 und der MS 3 wird üblicherweise als Handover bezeichnet.

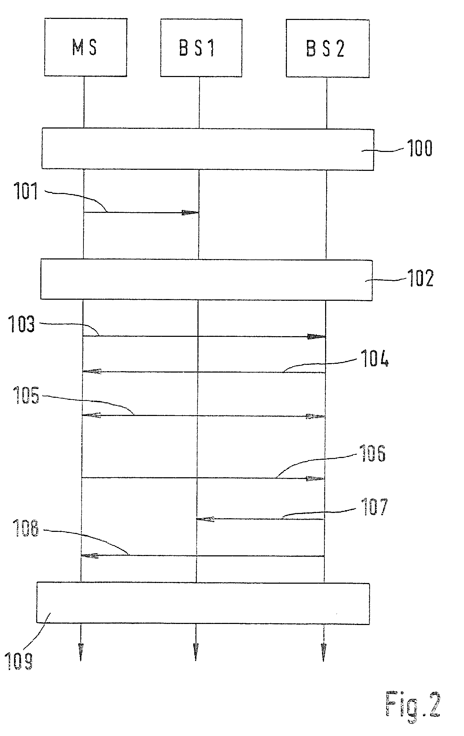

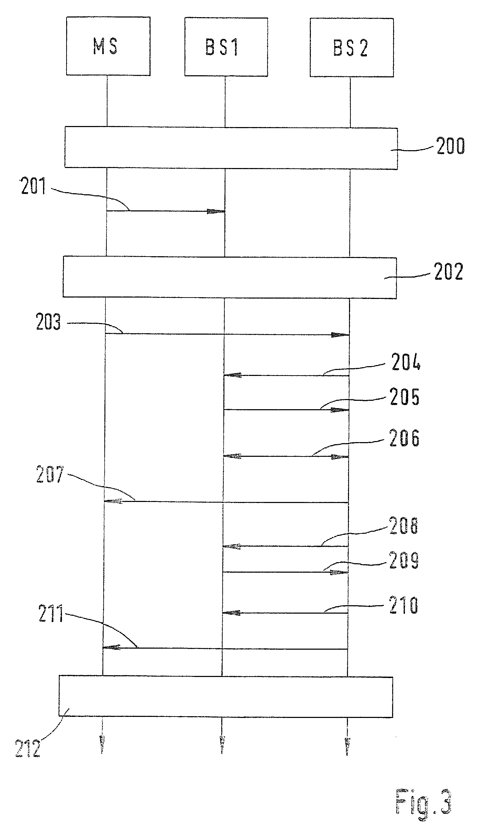

Für einen derartigen Handover müssen zwischen den beteiligten BS 1, BS 2 und der MS 3 Informationen ausgetauscht werden. In den Figuren 2 und 3 wird nun ein Verfahren erläutert, bei dem der Handover variabel gehandhabt wird, in Abhängigkeit davon, ob die BS 1 und die BS 2 bzw. die Schalteinheit 4 einen direkten Informationsfluß bezüglich der für den Handover benötigten Informationen zwischen der BS 1 und der BS 2 zulassen. In den Figuren 2 und 3 werden dazu drei Zeitstrahlen dargestellt, wobei jeder Zeitstrahl entweder der MS oder der BS 1 oder der BS 2 zugeordnet ist. Die Zeitachse läuft dabei von oben nach unten. Der Austausch von Nachrichten zwischen den MS, BS 1 und BS 2 wird durch Pfeile dargestellt, die jeweils vom Zeitstrahl der sendenden Station zum Zeitstrahl der empfangenden Station weisen. Zustände des Gesamtsystems oder interne Bearbeitungsvorgänge, bei denen keine Nachrichten ausgetauscht werden, werden jeweils durch Kästen symbolisiert, die sich über alle drei Zeitstrahlen hinweg erstrecken. Mehrere zusammenhängende Nachrichten können auch durch einen Doppelpfeil angezeigt werden.

In der Figur 2 wird ein Handover einer Mobilstation MS von einer ersten Basisstation BS 1 zu einer zweiten Basisstation BS 2 gezeigt. Im Schritt 100 wird festgestellt, dass ein Handover erforderlich ist, beispielsweise weil die Verbindungsqualität zwischen der MS und BS 1 unter einen bestimmten Wert gesunken ist. Im vorliegenden Beispiel nach der Figur 2 wird diese Entscheidung von der MS gefällt, die dann eine Nachricht 101 an die BS 1 schickt, der es mitteilt, dass es nun ein Handover durchführt (Handover Notify). Die BS 1 hört nach dem Empfang dieser Nachricht auf, Daten über die Funkschnittstelle an die MS zu senden. Im Schritt 102 sucht die MS eine neue Basisstation und synchronisiert sich mit dieser Basisstation. Es ist aber ebenfalls möglich, dass die MS, beispielsweise durch Messung der Feldstärke der BS 2, bereits weiß, bei welcher BS 2 sie sich wieder anmelden will, so dass dann die Suche nach einer neuen Basisstation entfällt. Durch die Synchronisation bereitet sich die MS auf die Kommunikation mit der neuen BS 2 vor, beispielsweise durch Anpassung einer gegenüber der alten BS 1 leicht veränderten Bitrate der BS 2. Die MS sendet dann mit der Nachricht 103 eine Handover-Anfrage (Handover Request) an die BS 2, in der es sie auffordert nun mit der MS in Verbindung zu treten. Die Aufforderung 103 enthält weiterhin die Adresse der BS 1 und könnte so die BS 2 in die Lage versetzen, direkt mit der BS 1 Daten bezüglich der Verbindung mit der MS auszutauschen. Da die BS 2 in dem Beispiel nach der Figur 2 jedoch dazu nicht in der Lage ist, sendet sie eine Nachricht 104 an die MS (No Netsupport) mit der angezeigt wird, dass das Netzwerk nicht in der Lage ist, die für die Verbindung notwendigen Informationen von der BS 1 zur BS 2 zu übertragen. Dies kann darin begründet sein, dass die BS 1, die BS 2, die Schalteinheit 4 oder irgendeine sonstige Einheit nicht in der Lage ist, den direkten Austausch zwischen der BS 1 und der BS 2 über die Verbindung mit der MS auszutauschen. Da die MS nun weiß, dass das Netzwerk den Handover nicht unterstützt verwendet die MS ein Handover-Verfahren, bei dem es der neuen Basisstation (BS 2) eine Vielzahl von Informationen zur Verfügung stellt. In einem ersten Schritt erfolgt die Authentisierung der Mobilstation bei der BS 2 wie dies durch den Doppelpfeil 105 dargestellt wird. Durch diese Authentisierung wird klargestellt, dass die MS berechtigt ist, mit der BS 2 zu kommunizieren. Dabei werden sicherheitsrelevante Daten, beispielsweise Schlüsselcodes und Verschlüsselungsdaten, für die Nachrichten selber ausgetauscht, was in der Regel ein mehrfaches Hin- und Hersenden von Nachrichten erfordert und entsprechend viel Zeit in Anspruch nimmt. Wenn sich die BS 2 so von der Zugangsberechtigung der MS überzeugt hat, sendet die MS eine Nachricht 106 (Option Information) die die aktuellen Parameter der Verbindung enthalten, wie sie zuvor mit der BS 1 bestanden. Die BS 2 sendet daraufhin eine Nachricht 107 an die BS 1 mit der Aufforderung, die Verbindung auf die BS 2 umzuschalten. Die Sendung dieser Nachricht von der BS 2 zur BS 1 ist hier nur eine von mehreren Möglichkeiten, prinzipiell reicht es auch aus, wenn die BS 2 diese Nachricht an die Schalteinheit 4 sendet, die daraufhin die Verbindung von der BS 1 auf die BS 2 umschaltet. Sobald die Verbindung umgeschaltet ist, sendet die BS 2 eine Bestätigung 108 an die MS (Handover Confirm), durch die der MS signalisiert wird, dass nun die Verbindung umgelegt ist und somit der Handover beendet ist. Im Zustand 109 ist somit dann die MS mit der BS 2 verbunden und tauscht mit dieser Daten aus.

In der Figur 2 wird somit ein Handover beschrieben, bei dem das Netzwerk nicht in der Lage ist, die MS bei dem Handover dadurch zu unterstützen, dass ein Teil der für die Kommunikation mit der neuen BS 2 erforderlichen Daten von der alten BS 1 zur neuen BS 2 transportiert werden. Die MS sendet aber gleich von einer Anfrage an die neue BS, ob eine derartige Unterstützung des Handover durch das Festnetz möglich ist. In der Figur 3 wird nun ein Handover beschrieben, bei dem das Netzwerk in der Lage ist, das Handover zu unterstützen.

In der Figur 3 wird nun ein Handover einer MS von einer BS 1 zu einer BS 2 in der gleichen Art und Weise dargestellt wie zur Figur 2. Der Beginn des Handovers erfolgt gleich wie bereits zu Figur 2 beschrieben, d.h. der Funktionsblock 200 entspricht dem Block 100, die Nachricht 201 der Nachricht 101 und der Block 202 entspricht dem Block 102 der Figur 2. Durch die Nachricht 203 sendet die MS wieder eine Handover-Anfrage an die BS 2, wobei die Adresse der alten BS 1 mitgeteilt wird. Da die BS 2 in der Lage ist, unmittelbar mit der BS 1 zu kommunizieren, sendet sie eine entsprechende Anfrage 204, um herauszufinden, ob die BS 1 in der Lage ist, die entsprechenden Informationen auch zu senden (Net Support Question). Da die alte BS 1 in der Lage ist, die entsprechenden Informationen zur Verfügung zu stellen, sendet es eine entsprechende Antwort 205 (Net Support Possible) mit der angezeigt wird, dass die BS 1 in der Lage ist, der BS 2 die für die Verbindung notwendigen Daten zur Verfügung zu stellen. Im Datenaustausch 206 werden dann zunächst die Daten ausgetauscht, die es der BS 2 ermöglichen festzustellen, ob die MS zur Kommunikation mit der BS 2 zugelassen ist. Da die Verbindung zwischen der BS 1 und der BS 2 wesentlich schneller ist als die Verbindung über die Funkschnittstelle, kann dies sehr schnell erfolgen. Weiterhin wird die Verbindung zwischen der BS 1 und der BS 2 als besonders sicher erachtet, d.h. die Authentisierungsdaten der MS können unverschlüsselt ausgetauscht werden oder zumindest kann die Sicherheit beim Austausch dieser Daten verringert werden. Nachdem die BS 2 festgestellt hat, dass die MS zur Kommunikation mit der BS 2 zugelassen ist, signalisiert sie der MS in der Nachricht 207, dass es die MS zur Kommunikation zulassen will und dass sich die BS 2 die für die Verbindung notwendigen Daten unmittelbar von der BS 1 beschaffen wird. Die BS 2 sendet dann eine Aufforderung 208 an die BS 1 (Option Request) mit der die BS 1 aufgefordert wird, die für die Verbindung relevanten Daten an die BS 2 zu senden. Dieser Aufforderung kommt dann die BS 1 in der Nachricht 209 nach (Option Information) in der die BS 1 alle für die Verbindung mit der MS notwendigen Daten an die BS 2 übergibt. Nach Erhalt dieser Daten sendet die BS 2 dann eine Aufforderung 210, die Verbindung umzuschalten (Redirect Connection) an die BS 1 oder die Schalteinheit 4 welches netzintern die Umschaltung der Verbindung auf die BS 2 bewirkt. Als letzte Nachricht des Handover sendet dann die BS 2 eine Handoverbestätigung 211 an die MS, mit der das Ende der Handoverprozedur signalisiert wird. Im Zustand 212 befindet sich dann die MS in unmittelbarem Datenaustausch mit der BS 2.

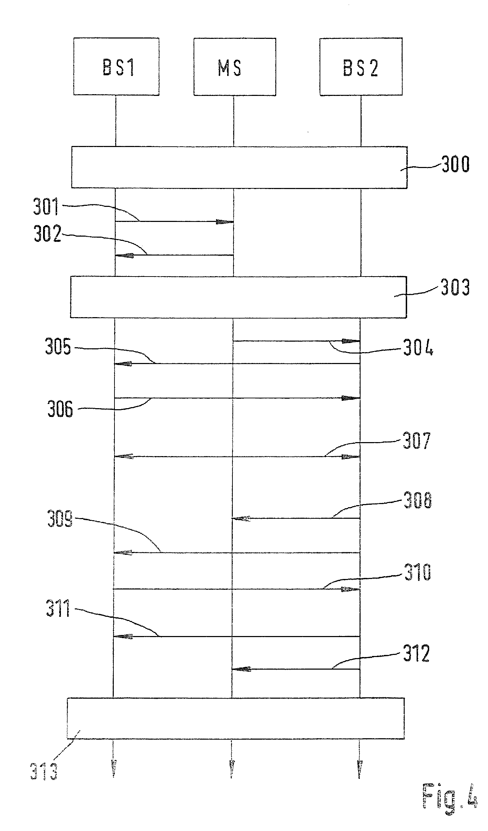

Bei dem Verfahren nach den Figuren 2 und 3 wird somit beim Handover unterschieden, ob das Netzwerk in der Lage ist, den Handover durch eine unmittelbare Kommunikation zwischen den beteiligten Stationen des Festnetzes zu unterstützen. Wenn die Mobilstation feststellt, dass das Netzwerk den Handover nicht unterstützt, so wird es die für die Verbindung erforderlichen Informationen selbst zur Verfügung stellen. Wenn die Mobilstation feststellt, dass das Netzwerk den Handover unterstützt, so wird es sich darauf verlassen, dass die beteiligten Festnetzstationen die Daten untereinander austauschen. Ebenso verhalten sich die beteiligten Basisstationen. Wenn sie eine Handover-Anfrage bekommen, werden sie versuchen sich die Daten von der alten Basisstation zu beschaffen. Sofern dies nicht möglich ist, fordern sie die Mobilstation auf, die entsprechenden Daten zur Verfügung zu stellen. Die folgenden Figuren 4 bis 6 befassen sich mit einem Handover-Verfahren einer MS von einer alten Basisstation BS 1 zu einer neuen Basisstation BS 2. Sofern der Handover zur neuen Basisstation BS 2 fehlschlägt, kann die MS durch eine einfache Nachricht die Verbindung mit der alten Basisstation BS 1 wieder aktivieren. Zu diesem Zweck bleiben die für die Verbindung notwendigen Informationen in der BS 1 gespeichert und die für die Funkverbindung notwendigen Ressourcen werden zunächst nicht neu vergeben.

Das hier beschriebene erste Verfahren gemäß den Figuren 2 und 3 gibt jetzt die Möglichkeit zunächst ohne Netzwerkunterstützung zu arbeiten und dann in der Folge, wenn das Netzwerk diese Funktionalität hat diese zu nutzen. Dazu übermittelt die neue Basisstation im Laufe des Nachrichtenaustausches, der zur Handover-Durchführung notwendig ist, ob es in der Lage ist, Netzwerkunterstützung zu geben. Dieses kann entweder fest eingestellt werden, oder aber die neue Basisstation versucht den alten Basisstation zu erreichen und festzustellen, ob diese den Dienst bietet. Sollte der Dienst nicht unterstützt werden muß die Mobilstation alle seine Verbindungsdaten und -optionen selbst zu der neuen Basisstation übermitteln.

Da im Allgemeinen die Übertragungsrate auf dem Backbone-Netzwerk sehr viel größer ist, als über die Luftschnittstelle (typ. 155Mbit/s vs. 20 Mbit/s) ist die Übermittlung der Verbindungsdaten von der Mobilstation zur Basisstation die langsamere Lösung. Außerdem wird hier die knappe Ressource Luftdatenrate weiter belastet. Daher ist eine Lösung vorzuziehen, wie sie in Fig. 3 gezeigt ist. Dabei wird ein Großteil der notwendigen Informationen über das Backbone-Netzwerk übertragen. Da dieses i.A. wesentlich schneller ist, als die Funkübertragung ist hier die Zeit, die für das HO benötigt wird geringer. Dadurch gehen weniger Daten verloren (Hard-Handover), die in der bis zur Umschaltung benötigten Zeit noch zur alten Basisstation gesendet werden.
Ein weiterer wesentlicher Vorteil besteht darin, dass man bei den Verbindungen im Backbone-Netzwerk i.A. von gesicherten Verbindungen ausgeht.
Da sich in den meisten Mobilfunksystemen eine Mobilstation bei einer Basisstation zunächst authentisieren muß, bevor eine Datenübertragung stattfindet, muß diese Authentisierungsprozedur auch bei einem HO ohne Netzwerkunterstützung durchgeführt werden. Diese Authentisierungsprozedur entfällt im Falle eines HO mit Netzwerkunterstützung, bzw. kann deutlich vereinfacht werden, indem die benötigten Schlüssel (Encryption-Keys) direkt zwischen den Basisstationen übertragen werden.

In der Figur 4 wird ein Handover gezeigt, bei der der MS erfolgreich ein Handover zur neuen BS 2 gelingt. Im Entscheidungsblock 300 beschließt die BS 1, dass es die Verbindung zur MS lösen will. Dies kann beispielsweise darin begründet sein, dass die von der BS 1 aufgespannte Funkzelle überlastet ist und so Kapazitäten freigemacht werden sollen. Die BS 1 sendet dann eine Aufforderung an die MS 301 mit der es die MS zu einem Handover auffordert (Force Handover). Die MS bestätigt diese Nachricht durch die Nachricht 302 (Handover Notify) mit der die MS signalisiert, dass es jetzt versucht, einen Handover zu einer anderen Basisstation durchzuführen. Die BS 1 stoppt dann die Datenübertragung über die Funkschnittstelle. Die für die Verbindung relevanten Daten bleiben jedoch zunächst in der BS 1 gespeichert und auch die für die Aufrechterhaltung der Verbindung mit der MS notwendigen Ressourcen (beispielsweise Funkfrequenzen oder dergleichen) werden zunächst von der BS 1 nicht neu vergeben. Die nun folgenden Verfahrensschritte des Handovers 303 bis 311 erfolgen in ähnlicher Weise wie die Verfahrensschritte 202 bis 210 der Figur 3. Im Schritt 303 sucht die MS eine neue Basisstation und synchronisiert sich mit dieser Basisstation. Mit der Nachricht 304 sendet die MS eine Handover-Anfrage an die BS 2 und übermittelt gleichzeitig die Adresse der alten BS 1. Die BS 2 sendet dann mit dem Schritt 305 eine Nachricht an die BS 1 um abzufragen, ob diese den Handover unterstützt. Mit der Nachricht 306 gibt die BS 1 eine positive Antwort, d.h. auch sie unterstützt den Handover. Beim Nachrichtenaustausch 206 werden die Authentisierungsparameter der MS zwischen der BS 1 und der BS 2 ausgetauscht. Durch die Nachricht 308 signalisiert die BS 2 der MS, dass der Handover vom Netzwerk unterstützt wird. Mit der Nachricht 309 fordert die BS 2 von der BS 1 die für die Verbindung notwendigen Informationen an, die dann mit der Nachricht 310 übersandt werden. Die Handover-Schritte 303 bis 310 entsprechen somit den Handover-Schritten 202 bis 209 der Figur 3. Der Schritt 311 entspricht dem Schritt 210, d.h. die BS 2 teilt der BS 1 mit, dass nun die Verbindung von der BS 1 auf die BS 2 umgeschaltet wird. Für die BS 1 ist diese Nachricht zugleich das Signal, dass nun die für die Verbindung mit der MS notwendigen Informationen nicht länger gespeichert werden müssen bzw. dass die Ressourcen, die für eine eventuelle Wiederkehr der MS noch reserviert waren nicht mehr benötigt werden. Die BS 1 kann somit die Information löschen bzw. die freigehaltenen Ressourcen nun anderweitig vergeben. Mit der Nachricht 312 teilt die BS 2 der MS mit, dass nun der Handover erfolgreich abgeschlossen wurde und im Zustand 313 besteht somit die Verbindung zwischen der MS und der BS 2. Die BS 1 wiederum hat wie gewünscht die Belastung der Funkzelle verringert, indem nun die MS mit der BS 2 verbunden ist.

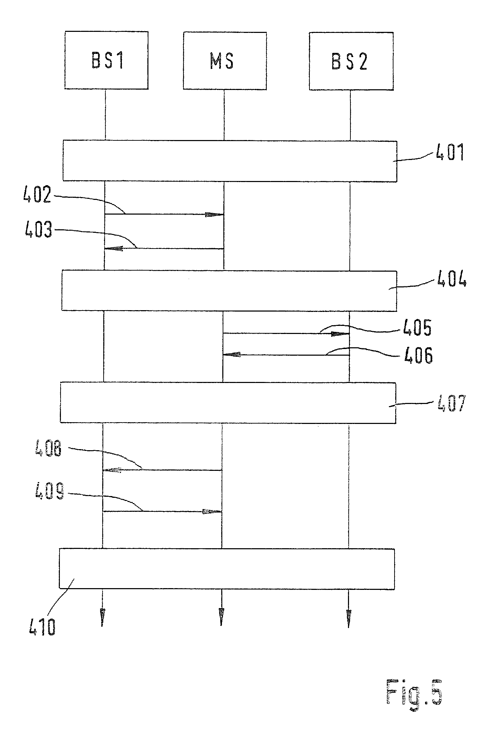

Der Sinn und Zweck der Speicherung der Verbindungsdaten und der Freihaltung der Ressourcen wird nun anhand der Figur 5 erläutert. In der Figur 5 werden mit den Bezugszeichen 401 bis 405 die gleichen Zustände und Nachrichten bezeichnet, wie in der Figur 4 mit den Bezugszeichen 300 bis 304. Auf die Handover-Anforderung 405 der MS reagiert die BS 2 jedoch mit der Nachricht 406, in der der Handover der MS zurückgewiesen wird. Dies kann beispielsweise darin begründet sein, dass die Funkzelle der BS 2 ebenfalls überlastet ist und sie daher keine Verbindungen mit neuen MS eingehen kann. Die MS, der somit mitgeteilt wurde, dass ein Handover nicht erfolgen kann, synchronisiert sich daher im Zustand 406 erneut auf die BS 1 und sendet dann in der Nachricht 408 eine Mitteilung an die BS 1, in der signalisiert wird, dass die MS die Verbindung mit der BS 1 aufrechterhalten will. Durch eine einfache Quittungsnachricht 409 kann dann die Verbindung zwischen der BS 1 und der MS wieder aufgenommen werden. Dieser Vorgang erfolgt natürlich sehr schnell, da weder eine neue Authentisierung der MS bei der BS 1 erfolgen muß und die alten Verbindungsdaten, die ja immer noch in der BS 1 gespeichert sind, weiter genutzt werden können. Im Zustand 410 ist somit die MS nach wie vor mit der BS 1 verbunden und nicht mit der BS 2.

Das in den Figuren 4 und 5 dargestellte Verfahren ermöglicht es somit, dass eine MS testweise versucht, ein Handover zu einer anderen Basisstation durchzuführen. Wenn dieser Handover fehlschlägt, kann die MS ohne Probleme zu ursprünglichen alten Basisstation BS 1 zurückkehren, ohne dass dieser Vorgang sehr viel Zeit erfordern würde. Durch den Versuch des Handovers entsteht somit keine lange Unterbrechung im Datenstrom, da die aufwendigen Authentisierungsprozeduren und die Neuspeicherung der Verbindungsdaten entfällt. Dieses Verfahren kann daher vorteilhafter Weise in Netzwerken eingesetzt werden, bei denen das Netzwerk nicht in der Lage ist, den Handover für die Mobilstation vorzubereiten. Dies ist insbesondere bei Netzwerken der Fall, in denen Basisstationen mit unterschiedlichen Fähigkeiten nebeneinander operieren. Dies kann beispielsweise der Fall sein, wenn bei einer Umstellung von einer Mobilfunkgeneration auf eine nächste Mobilfunkgeneration zeitweise Basisstationen nach dem neuen Standard und Basisstationen nach dem alten Standard vorhanden sind mit denen zwar die Mobilstationen jeweils kommunizieren können, die aber nicht in der Lage sind, untereinander in ausreichendem Maße zu kommunizieren. Die Mobilstation kann hier von einer ersten Basisstation BS 1 testweise zum Handover zu einer anderen Basisstation aufgefordert werden. Wenn dieser Handover dann fehlschlägt, kann die Mobilstation ohne Probleme und ohne große Unterbrechung des Datenflusses zur alten Basisstation zurückkehren. Die Basisstation wird dann versuchen durch Aufforderung von anderen Mobilstationen eine Entlastung der Funkzelle zu bewerkstelligen.

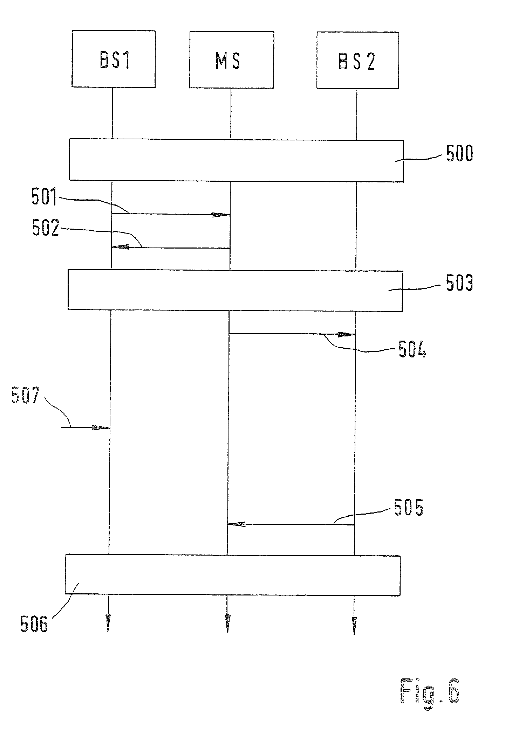

Die Speicherung der Verbindungsdaten und das Freihalten von Ressourcen in der BS 1 sollte natürlich nicht für alle Ewigkeiten erfolgen. In der Figur 6 wird dazu eine weitere Variante beschrieben, bei der die Funktionsblöcke oder Nachrichten 500 bis 504 den Funktionsblöcken oder Nachrichten 300 bis 304 der Figur 4 entsprechen. Die BS 1 startet jedoch eine Uhr, durch deren Ablauf ein Zeitpunkt 507 auf der der BS 1 zugeordneten Zeitachse markiert ist. Wie in der Figur 6 dargestellt wird, erhält die MS auf ihre Nachricht 504 zunächst keine Nachricht, sondern es vergeht, beispielsweise aufgrund einer Störung oder dergleichen, ein sehr langer Zeitraum, bevor von der BS 2 die Mitteilung 505 erfolgt, in der signalisiert wird, dass die BS 2 keine Verbindung zur MS schalten kann. Da mit Ablauf der Uhr zum Zeitpunkt 507 alle Verbindungsdaten in der BS 1 gelöscht wurden und die zunächst für die Verbindung freigehaltenen Ressourcen neu vergeben wurden, kann sich die MS nicht durch eine einfache Nachricht wieder bei der BS 1 anmelden. Im Zustand 506 hat somit die MS ihre Verbindung zum Netzwerk verloren und kann nur durch eine vollständig neue Anmeldung versuchen, wieder eine Verbindung mit dem Netzwerk aufzubauen.

Bei derzeitigen Lösungen für forced Handover wird immer von Backward HO ausgegangen (z.B. GSM). Dabei sucht die alte Basisstation nach einer passenden neuen Basisstation und teilt der Mobilstation diese mit. Danach versucht die Mobilstation diese neue Basisstation zu erreichen. Bei dem derzeit bei ETSI in der Standardisierung befindlichen System BRAN ist dieses Verfahren mit hoher Wahrscheinlichkeit in der ersten Phase nicht möglich. Hier wird es zunächst nur ein Forward-HO geben. Dennoch ist es sehr sinnvoll ein Forced-HO durchführen zu können, um so die Gesamtleistung eines Netzes besser ausnutzen zu können. In dieser Erfindung wird jetzt verhindert, dass eine Mobilstation von seiner alten Basisstation in ein HO gedrängt wird (forced), diese MS aber keine Basisstation findet, oder keine findet, die den Verkehr dieser Mobilstation tragen kann. Wenn jetzt die Mobilstation zurück zu seiner alten Basisstation will, hat diese unter Umständen schon eine neue Mobilstation angenommen und kann die alte Mobilstation nicht mehr bedienen. Dadurch werden die Verbindungen der alten Mobilstation abgebrochen.
Es wird nun vorgesehen die Daten und Ressourcen der Basisstation bei einem Handover zunächst nicht freizugeben. Dazu wird zum Beispiel eine Uhr gestartet, wenn die alte Basisstation die Mobilstation auffordert eine neue Basisstation zu suchen (oder wenn die Mobilstation dieses bestätigt). Die Basisstation hält jetzt die Ressourcen der Mobilstation so lange reserviert, bis es die Aufforderung erhält die Verbindungen umzuleiten, oder bis der Timer ausläuft. In dieser Zeit hat die Mobilstation Zeit, sich eine neue Basisstation zu suchen, die in der Lage ist, den Verkehr zu tragen. Sollte die Suche nach einer neuen Basisstation erfolglos sein, meldet sich die MS wieder bei seiner alten BS und behält seine vorherigen Einstellung bei. Wenn sich die MS nicht innerhalb der durch den Timer bestimmten Zeit zurückmelden gibt die alte Basisstation die Ressourcen frei und löscht die MS aus seinen Listen.

Die Verwendung einer Uhr (timer) kann natürlich für alle Beispiele wie sie in den Figuren 4 bis 6 gezeigt angezeigt sein. Erstes Beispiel ist das in Figur 4 gezeigte erfolgreiche Handover. Dabei wird hier beispielhaft das oben beschriebene netzwerkunterstützte Handover gezeigt. Diese ist jedoch in keiner Weise relevant, das beschriebene Verfahren funktioniert ebenso mit anderen Handover-Varianten. Bei diesem Beispiel erreicht die Meldung, dass die Verbindungen umgeleitet werden die alte Basisstation bevor der Timer ausläuft. Danach wird dieser gelöscht und die Ressourcen können für eine anderes MS verwendet werden.

Das zweite Beispiel zeigt, dass die Mobilstation nicht in der Lage war, sich bei einer andere Basisstation anzumelden (hier: wegen einer Abweisung, kann aber auch sein, dass keine andere Basisstation empfangen wird). Dabei meldet sich die Mobilstation vor Ablaufen des Timers bei der alten Basisstation. Daraufhin wird die alte Verbindung wieder aufgenommen (siehe Figur 5). Die Basisstation kann daraufhin eine andere Mobilstation in ihrem Bereich zu einem HO auffordern.

Das dritte Beispiel (Figur 6) zeigt, was passiert, wenn der Timer auslaüft, ohne dass die Basisstation eine Meldung erhält. Nach Auslaufen des Timers werden die Ressourcen innerhalb der Basisstation freigegeben und eventuell einer neuen Mobilstation zugewiesen.

## Patentansprüche

1. Verfahren zum Betrieb einer Mobilstation (3) in einem Mobilfunksystem, wobei die Mobilstation (3) über eine erste Basisstation (1) eine Verbindung zu einem Netzwerk hat, wobei die erste Basisstation eine Handover-Aufforderung (301, 402, 501) an die Mobilstation (3) sendet, wobei die erste Basisstation (1) des Mobilfunksystems nach einer Bestätigung (302, 403, 502) der Handover-Aufforderung (301, 402, 501) durch die Mobilstation (3) eine Datenübertragung über die Funkschnittstelle zur Mobilstation (3) stoppt, jedoch für die Verbindung relevanten Daten bis zu einem Ablauf einer Uhr gespeichert lässt, und auch für die Aufrechterhaltung der Verbindung mit der Mobilstation (3) notwendigen Ressourcen bis zum Ablauf der Uhr nicht neu vergibt, wobei die Mobilstation (3) nach der Handover-Aufforderung (301, 402, 501) der ersten Basisstation (1) versucht, testweise einen Handover zu einer anderen Basisstation durchzuführen, diese Handover-Aufforderung (301, 402, 501) bestätigt und, sofern sie nicht schon weiß, beispielsweise durch Messung einer Feldstärke der anderen Basisstation, bei welcher neuen Basisstation sie sich wieder anmelden will, eine neue Basisstation sucht (303, 404, 503), sich mit dieser neuen Basisstation (2) synchronisiert (303, 404, 503), sich dort anmeldet, und eine Funkverbindung zur neuen Basisstation (2) aktiviert.

2. Verfahren nach Anspruch 1, **dadurch gekennzeichnet, dass** die erste Basisstation (1) die Ressourcen so lange reserviert und die für die Verbindung relevanten Daten so lange speichert, bis die erste Basisstation (1) entweder eine Mitteilung (311) über einen erfolgreichen Handover von der neuen Basisstation (2) empfängt, oder eine durch die Uhr bestimmte Zeit (507) abgelaufen ist.

3. Verfahren nach Anspruch 1 oder 2, **dadurch gekennzeichnet, dass** das Netzwerk nicht in der Lage ist, den Handover für die Mobilstation (3) vorzubereiten.

4. Verfahren nach Anspruch 3, **dadurch gekennzeichnet, dass** die erste Basisstation (1) die Suche nach einer neuen, geeigneten Basisstation nicht übernimmt.

5. Verfahren nach einem der vorausgehenden Ansprüche, **dadurch gekennzeichnet, dass** die Mobilstation (3) beim Fehlschlag des Handovers die Verbindung zur ersten Basisstation (1) wieder herstellen kann, wobei für die so wiederhergestellte Verbindung die gespeicherten Verbindungsdaten und die reservierten Ressourcen der ersten Basisstation (1) verwendet werden.

6. Verfahren nach Anspruch 5, **dadurch gekennzeichnet, dass** die Wiederherstellung der Verbindung zur ersten Basisstation (1) durch eine einfache Quittierungsnachricht (409) erfolgt.

7. Verfahren nach Anspruch 5 oder 6, **dadurch gekennzeichnet, dass** keine neue Authentisierung der Mobilstation (3) bei der ersten Basisstation (1) erfolgen muss.

## Claims

1. Method for operating a mobile station (3) in a mobile radio system, wherein the mobile station (3) has a connection to a network via a first base station (1), wherein the first base station sends a handover request (301, 402, 501) to the mobile station (3), wherein the first base station (1) of the mobile radio system stops a data transmission via the radio interface to the mobile station (3) following confirmation (302, 403, 502) of the handover request (301, 402, 501) by the mobile station (3), but leaves the data that are relevant to the connection stored until the expiration of a clock and also does not reallocate the resources that are necessary for maintaining the connection to the mobile station (3) until the expiration of the clock, wherein the mobile station (3), following the handover request (301, 402, 501) by the first base station (1), tries to perform a handover to another base station as a test, confirms this handover request (301, 402, 501) and, if it does not already know, for example by measurement of a field strength of the other base station, the new base station with which it wishes to register again, seeks (303, 404, 503) a new base station, synchronizes (303, 404, 503) to this new base station (2), registers therewith and activates the radio link to the new base station (2).

2. Method according to Claim 1, **characterized in that** the first base station (1) reserves the resources, and stores the data that are relevant to the connection, until either the first base station (1) receives a communication (311) about a successful handover from the new base station (2) or a time (507) determined by the clock has elapsed.

3. Method according to Claim 1 or 2, **characterized in that** the network is not capable of preparing the handover for the mobile station (3).

4. Method according to Claim 3, **characterized in that** the first base station (1) does not undertake the search for a new, suitable base station.

5. Method according to one of the preceding claims, **characterized in that** the mobile station (3) can restore the connection to the first base station (1) in the event of the handover failing, with the stored connection data and the reserved resources of the first base station (1) being used for the thus restored connection.

6. Method according to Claim 5, **characterized in that** the connection to the first base station (1) is restored by a simple acknowledgement message (409).

7. Method according to Claim 5 or 6, **characterized in that** reauthentication of the mobile station (3) with the first base station (1) does not need to take place.

## Revendications

1. Procédé de mise en fonctionnement d'une station mobile (3) dans un système radio mobile, dans lequel la station mobile (3) dispose d'une liaison à un réseau par l'intermédiaire d'une première station de base (1), dans lequel la première station de base transmet à la station mobile (3) une demande de transfert (301, 402, 501), dans lequel la première station de base (1) du système radio mobile interrompt une transmission de données à la station mobile (3) par l'intermédiaire de l'interface radio après une confirmation (302, 403, 502) de la demande de transfert (301, 402, 501) par la station mobile (3), mais fait en sorte que des données pertinentes pour la liaison soient stockées jusqu'à ce qu'un compteur se soit écoulé, mais n'attribue pas non plus de nouveau jusqu'à l'écoulement du compteur des ressources nécessaires au maintien de la liaison à la station mobile (3), dans lequel la station mobile (3), après la demande de transfert (301, 402, 501) de la première station de base (1), essaye d'exécuter à titre de test un transfert à une autre station de base, confirme cette demande de transfert (301, 402, 501) et recherche une nouvelle station de base (303, 404, 503) dans la mesure où elle ne sait pas encore, par exemple par la mesure d'une intensité du champ de l'autre station de base, à quelle nouvelle station de base elle souhaite se reconnecter, elle se synchronise (303, 404, 503) avec cette nouvelle station de base (2), s'y connecte, et active une liaison radio à la nouvelle station de base (2).

2. Procédé selon la revendication 1, **caractérisé en ce que** la première station de base (1) réserve les ressources et stocke les données pertinentes pour la liaison soit jusqu'à ce que la première station de base (1) reçoive soit une communication (311) concernant une réussite du transfert de la nouvelle station de base (2), soit après qu'un temps (507) déterminé par le compteur se soit écoulé.

3. Procédé selon la revendication 1 ou 2, **caractérisé en ce que** le réseau n'est pas en mesure de préparer le transfert pour la station mobile (3).

4. Procédé selon la revendication 3, **caractérisé en ce que** la première station de base (1) ne procède pas à la recherche d'une nouvelle station de base appropriée.

5. Procédé selon l'une quelconque des revendications précédentes, **caractérisé en ce que** la station mobile (3), lors d'un échec du transfert peut rétablir la liaison à la première station de base (1), dans lequel les données de liaison stockées et les ressources réservées de la première station de base (1) sont utilisées pour la liaison ainsi rétablie.

6. Procédé selon la revendication 5, **caractérisé en ce que** le rétablissement de la liaison à la première station de base (1) s'effectue par l'intermédiaire d'un message d'accusé de réception (409) simple.

7. Procédé selon la revendication 5 ou 6, **caractérisé en ce qu'**aucune nouvelle authentification de la station de base (3) ne doit être effectuée auprès de la première station de base (1).
